Europäisches Patentamt

European Patent Office

Office européen des brevets

(11) Veröffentlichungsnummer: **0 412 580 A1**

# EUROPÄISCHE PATENTANMELDUNG

(21) Anmeldenummer: **90118569.4**

(22) Anmeldetag: **07.10.88**

(51) Int. Cl.5: **G01F 23/28**, G01F 23/04

Diese Anmeldung is am 27 - 09 - 1990 als Teilanmeldung zu der unter INID-Kode 60 erwähnten Anmeldung eingereicht worden.

(30) Priorität: **13.11.87 DE 3738515**

(43) Veröffentlichungstag der Anmeldung:
**13.02.91 Patentblatt 91/07**

(60) Veröffentlichungsnummer der früheren Anmeldung nach Art. 76 EPÜ: **0 316 564**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Dukart, Anton**
**Sparbenhecke 14D**
**D-6729 Wörth 2(DE)**
Erfinder: **Hauler, Peter**
**Merkurweg 4**
**D-7505 Ettlingen 5(DE)**
Erfinder: **Zabler, Erich, Dr.**
**Brunhildstrasse 11**
**D-7513 Stutensee 1(DE)**

(54) **Füllstandsanzeiger.**

(57) Bei einem Füllstandsanzeiger (12), insbesondere für Kraftstoffbehälter (10) von Kraftfahrzeugen, werden über einen Sender (13) Ultraschallwellen (17) in einen Schalleiter (11) eingeleitet. Aufgrund der unterschiedlichen Schallimpedanz (Z) des Materials des Schalleiters (11) und des Fluids, dessen Füllhöhe (h) bzw. Füllvolumen bestimmt werden soll, treffen die Schallwellen (17) phasenverschoben auf den Empfänger (14) auf. Die Phasenverschiebung ($\Delta\phi$) der Schallwellen (17) ist proportional zu der Füllhöhe des Fluids. Durch geeignete Wahl des Materials bzw. der Zusammensetzung aus verschiedenen Materialien des Schalleiters (11) kann der Füllstandsanzeiger (12) auf ein eindeutiges oder auf ein möglichst gut auflösendes Meßsignal abgestimmt werden. Bei Verwendung mehrerer Schalleiter (11) kann ein Füllstandsanzeiger (12) mit beiden Eigenschaften verwirklicht werden.

FIG.1

EP 0 412 580 A1

# FÜLLSTANDSANZEIGER

## Stand der Technik

Die Erfindung betrifft einen Füllstandsanzeiger der im Anspruch 1 angegebenen Art. Aus der DE-A1 28 39 634 ist ein Füllstandsanzeiger bekannt, dessen physikalisches Prinzip auf einer direkten und indirekten Messung der Schallgeschwindigkeit von Lambwellen in Abhängigkeit von der vorhandenen Füllstandshöhe beruht. Dabei wird abhängig von der Phasenbeziehung der Lambwellen zwischen Sender und Empfänger auf die Füllstandshöhe geschlossen. Die dort verwendete Schutzhülse hat ausschließlich Schutzfunktionen, um eine robuste Ausführungsform zu ermöglichen. Die Schutzhülse soll das eigentliche Meßgerät vor aggressiven Flüssigkeiten schützen. Die eindeutige Zuordnung eines Meßsignals wird durch eine Veränderung der Frequenz und durch eine Veränderung des Abstandes zwischen Sender und Empfänger angestrebt.

Beim Füllstandssensor nach der Entgegenhaltung DE-A1-30 02 118 werden von einem Sender in einen Übertragungskörper Schallwellen eingespeist. Hierzu wird aber ein anderer physikalischer Effekt ausgewertet. Der Empfänger erfaßt die durch die unterschiedliche Füllstandshöhe hervorgerufene Amplituden- bzw. Leistungsänderung der Schwingungen. Das Meßprinzip beruht hier darauf, daß die Übertragung von Ultraschallwellen in einem Leiter abnimmt, wenn dieser Leiter in eine Flüssigkeit eintaucht. Je höher dabei die Füllstandshöhe ist, desto geringer ist die am Empfänger ankommende Leistung der Ultraschallwellen. Ferner existiert eine Grenzfrequenz, über der das bei diesem Gegenstand verwendete Meßprinzip auftritt, während eine Beeinflussung der Phasengeschwindigkeit nur unter dieser Grenzfrequenz auftritt.

Ferner ist es bekannt, mit Hilfe des Echolotverfahrens oder einer Reflexion des Schalls an der Grenzschicht des zu bestimmenden Mediums die Füllstandshöhe zu ermitteln. Diese Füllstandsanzeiger sind aber nur schwer für bei Kraftfahrzeugen verwendeten unregelmäßigen Tankformen verwendbar. Auch bauen sie aufwendig und teuer und sind durch an der Wand reflektierte Echos ungenau und störanfällig.

## Vorteile der Erfindung

Der erfindungsgemäße Füllstandsanzeiger mit den Merkmalen des Anspruchs 1 hat demgegenüber den Vorteil, daß das Meßsignal eindeutig einer Füllstandshöhe zugeordnet werden kann. Werden zwei Stäbe aus verschiedenen Materialien verwendet, so kann bei nicht hörbaren Frequenzen eine hochauflösende und auch eindeutig identifizierbare Messung durchgeführt werden. Besonders im Bereich des sogenannten Restbereichs (Reservebereich) kann der Meßbereich aufgespreizt werden, um eine genaue Bestimmung der Restmenge zu ermöglichen. Der Schall wird in einem Festkörper geleitet, so daß durch entsprechende Verbiegung des Festkörpers der Füllstandsanzeiger leicht an beliebige Tankformen anpaßbar ist. Der Füllstandsanzeiger bestimmt zuverlässig und störsicher bei einer hohen Auflösung und einem großen Meßeffekt die Füllstandshöhe. Es werden keine mechanisch bewegten Teile verwendet. der Füllstandsanzeiger weist eine kurze Meßzeit auf, die nur durch die Laufzeit des Schalls ($t \leq 1$ ms) bestimmt wird. Da der Festkörper mit piezoelektrischen Resonanzschwingern angeregt wird, hat er eine geringe Leistungsaufnahme.

Durch die in den Unteransprüchen aufgeführten Maßnahmen sind vorteilhafte Weiterbildungen des im Anspruch 1 angegebenen Füllstandsanzeigers möglich.

## Zeichnung

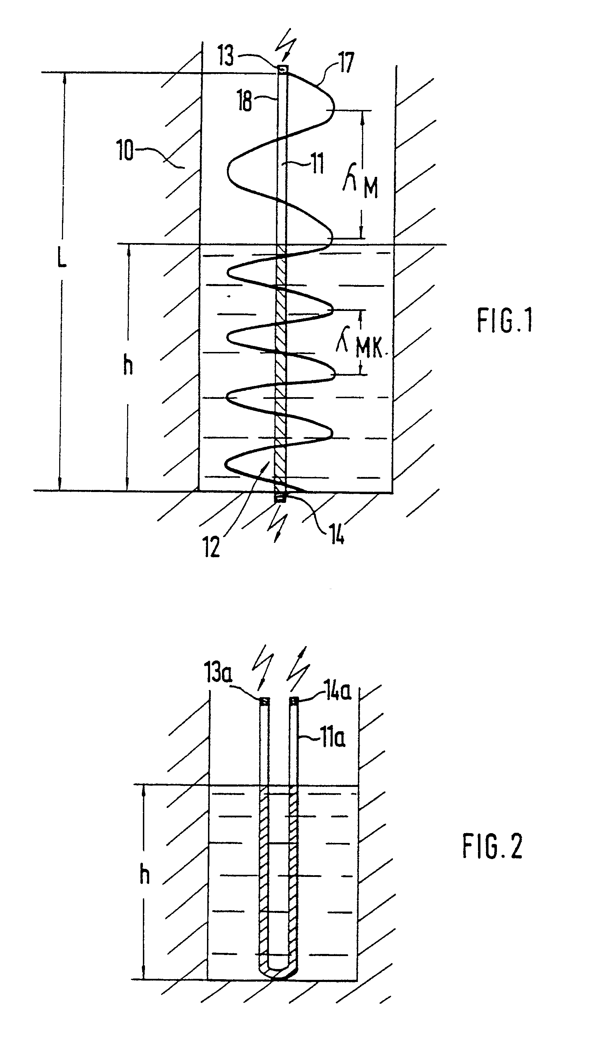

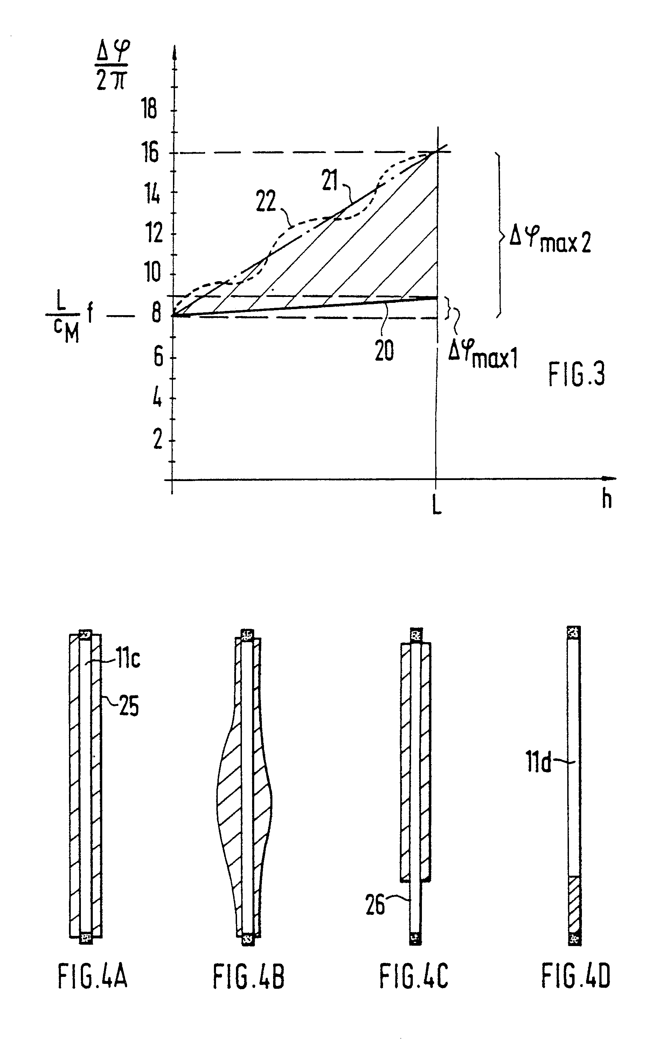

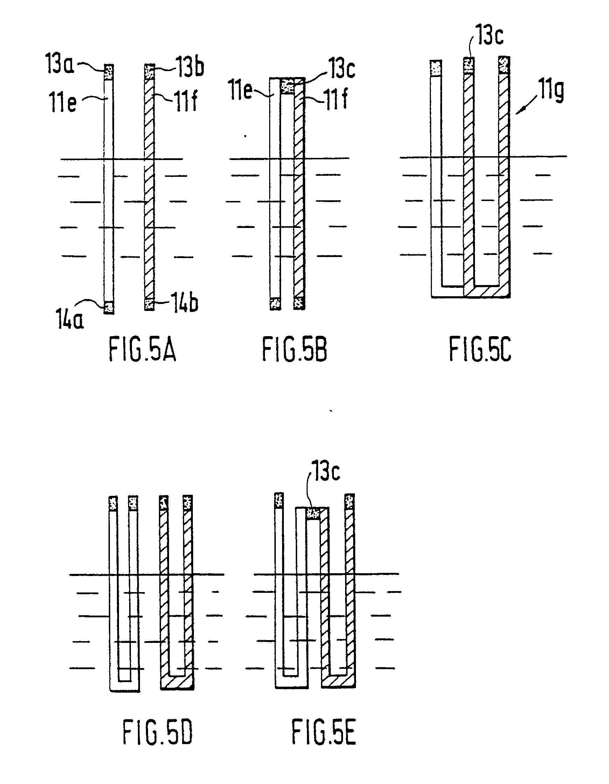

Ausführungsbeispiele der Erfindung sind in der Zeichnung dargestellt und in der nachfolgenden Beschreibung näher erläutert. Es zeigen Figur 1 eine Ausgestaltung des Füllstandsanzeigers im Längsschnitt, Figur 2 eine Abwandlung nach Figur 1, Figur 3 ein Diagramm des Phasenhubs $\Delta\phi$ über die Füllstandshöhe h, Figuren 4a bis d verschiedene Abwandlungen des Übertragungskörpers und Figuren 5a bis e verschiedene Übertragungskörper bei Verwendung von unterschiedlichen Frequenzen.

## Beschreibung der Ausführungsbeispiele

In Figur 1 ist mit 10 der Tank für den Kraftstoff eines Kraftfahrzeugs bezeichnet, in den ein Schalleiter 11 eines Füllstandsanzeigers 12 für die Kraftstoffmenge in den Tank 10 ragt. Der Schalleiter 11 weist an seinem oberen Ende einen Sender 13, z.B. piezoelek trischen Resonanzschwinger, und an seinem unteren, sich am Boden des Tanks 10 befindlichen Ende einen Empfänger 14 auf. Der Sender 13 ist als Schwinger für insbesondere Ultraschallwellen ausgebildet und soll sich über der maximalen Füllhöhe L des Tanks 10 befinden, so daß er nicht in den Kraftsoff hineinragt. Die effektive Füllhöhe des Kraftstoffs im Tank 10 ist mit h bezeichnet.

Wie in Figur 2 dargestellt, ist auch eine U-förmige Ausbildung des Schalleiters 11a möglich. Dadurch ergibt sich bei doppelter Stablänge auch die doppelte Eintauchtiefe und somit die doppelte Laufzeit des Schalls. Der Sender 13a und der Empfänger 14a sind beide an den Enden des Schalleiters 11a angeordnet, so daß sich beide im Bereich oberhalb des maximalen Flüssigkeitspegels befinden. Der Sender 13a und der Empfänger 14a können dann sehr einfach zu einer Einheit zusammengefaßt werden. Ferner ist es auch möglich, die Form des Schalleiters am die Form des Tanks anzupassen.

Vom Sender 13 werden im Schalleiter 11 Schallwellen 17, sogenannte Lambwellen, d.h. Oberflächenwellen im Bereich des Schalleiters 11, angeregt, deren Fortpflanzungsgeschwindigkeit im Bereich der Füllhöhe h des Kraftstoffs wesentlich kleiner ist als im von der Luft umgebenden Bereich L - h des Schalleiters 11. Die Schallwellen 17 treten, wie in Figur 1 dargestellt, an dem Übergangsflächen 18 mit diesen jeweils umgebenden Medium in Kontakt. Die Beeinflussung der Fortpflanzungsgeschwindigkeit der Schallwellen 17 bestimmt sich nach der Größe der Übergangsfläche 18 und ist abhängig vom Verhältnis der Querschnittsfläche zum Umfang des Schalleiters 11. An Schalleitern 11, deren Umfang im Verhältnis zur Querschnittsfläche größer ist, wie z.B. bei Vierkantmaterial, wird die Fortpflanzungsgeschwindigkeit der Schallwellen mehr verändert als z.B. bei einem Rundmaterial. Das Verhältnis der Schallimpedanz Z im Schalleiter 11 zur Schallimpedanz Z im umgebenden Medium bestimmt die Veränderung der Fortpflanzungsgeschwindigkeit. Je größer die Schallimpedanz Z des Schalleiters 11 gegenüber dem des Mediums ist, desto geringer wird die Fortpflanzungsgeschwindigkeit im Schalleiter beeinflußt. Die Schallimpedanz Z für übliche als Schalleiter verwendete Materialien und deren umgebende Medien ist in folgender Tabelle dargestellt:

| Material | Z (M Pa/m/S) |
|---|---|
| Aluminium (Al) | 17,064 |
| Kupfer (Cu) | 41,830 |
| Stahl (St 37) | 46,472 |
| Wasser | 1,480 |
| Plexiglas | 3,22 |
| Luft | 0,00331 |
| Kraftstoff (Super) | 0,841 |
| $Z = c \cdot x$<br>$c$ = Geschwindigkeit der Schallwellen<br>$x$ = spezifische Dichte<br>$Z$ = Schallimpedanz | |

Es ist ersichtlich, daß das Medium Luft die Fortpflanzungsgeschwindigkeit der Schallwellen 17 fast nicht beeinflußt. Hingegen wird die Fortpflanzungsgeschwindigkeit der Schallwellen 17 im Bereich der Füllhöhe h beim Medium Wasser um einen Faktor von ca. 1,5 verringert. Die vom Sender 13 ausgestrahlten Schallwellen 17 werden somit beim Eintauchen des Schalleiters 11 in die Flüssigkeit, d.h. im Bereich h, gegenüber dem uneingetauchten Zustand, d.h. im Bereich L - h verzögert, so daß am Empfänger 14 ein entsprechend der Verzögerung der Schallwellen 17 ein phasenverschobenes Signal meßbar ist. Diese Phasenverschiebung setzt sich additiv aus einem von der Füllhöhe h abhängigen und einem davon unabhängigen Term zusammen:

$$\Delta\varphi = \left( \frac{L-h}{c_M} + \frac{h}{c_{MK}} \right) \cdot \omega$$

$$= \frac{L}{c_M}\omega + \frac{h \cdot \omega}{c_M} \cdot \left( \frac{c_M}{c_{MK}} - 1 \right)$$

L = maximale Höhe des Schalleiters

h = Füllstandshöhe

$\Delta\phi$ = Phasenverschiebung

$c_M$ = Geschwindigkeitkeit der Schallwellen über dem Medium im Bereich L - h, z.B. in Luft

$c_{MK}$ = Geschwindigkeit der Schallwellen des Mediums, dessen Füllhöhe h bestimmt werden soll

$\omega$ = Kreisfrequenz der Schallwellen

Der maximal mögliche Phasenhub $\phi_{max}$, d.h. die maximal mögliche Phasenverschiebung zwischen minimaler und maximaler Füllhöhe h, also bei h = 0 und bei h = L, tritt umso stärker in Erscheinung als sich die Schallgeschwindigkeit des eingetauchten Abschnitts des Übertragungskörpers 11 von der Schallgeschwindigkeit des übrigen Abschnitts, des sich in Luft befindlichen unterscheidet. Bei einer maximalen Füllstandshöhe L von ca. 80 cm kann es aber vorkommen, daß sich eine Phasenverschiebung von mehreren Vollwinkeln, d.h. mehrmals um 2 $\pi$, ergibt. Dadurch ist keine eindeutige Zuordnung des Meßsignals zu einer bestimmten Füllstandshöhe h mehr möglich. In Figur 3 ist der entsprechende Verlauf der Phasenverschiebung $\Delta\phi$ über der Füllhöhe h dargestellt. Die Phasenverschiebung $\Delta\phi$ ist dabei auf 2 $\pi$ bezogen, so daß aus dem Diagramm naoh Figur 3 erkenntlich ist, wieviele Phasenverschiebungen vorliegen. Die Kurve 20 zeigt dabei den linearen Verlauf einer eindeutig zu messenden Phasenverschiebung von $\Delta\phi$ $_{max1}$ = 360$^\circ$. Die Kurve 21 hingegen zeigt den linearen Verlauf einer nicht mehr eindeutig zu messenden Phasenverschiebung mit einem Phasenhub von $\phi$ $_{max2}$. Aus Gründen der Eindeutigkeit ist der Meßeffekt nur in dem Bereich ausnutzbar, in welchem die maximale Phasenverschiebung $\phi$ $_{max}$ einen Vollwinkel (2 $\pi$) nicht überschreitet. Diese gewünschte Eindeutigkeit des Meßsignals läßt sich nur schwierig über eine gewünschte Erniedrigung der Schwingungsfrequenz lösen. Dabei würde die Frequenz f in den für das menschliche Ohr hörbaren Bereich gelangen und sollte deshalb bevorzugt im Bereich von 25 bis 35 kHz liegen.

Um eine eindeutige Signalzuordnung zu erhalten, sollte ferner der Unterschied zwischen der Schallgeschwindigkeit $c_M$ im Schalleiter und der Schallgeschwindigkeit $c_{MK}$ in dem diesen umgebenden Medium entsprechend klein gehalten werden. Dies ist leicht aus nachfolgender Formel zu ersehen:

$$\frac{\Delta\varphi\,max}{2\,\pi} = f \cdot \frac{L}{c_M} \left( \frac{c_M}{c_{MK}} - 1 \right) \leqq 1$$

Für den Faktor

$$f \cdot \frac{L}{c_M}$$

ergibt sich in der Praxis bei Verwendung einer Frequenz f = 30 kHz und einer Tanklänge L = 60 cm und $c_M$ = 2260 m/s ein typischer WErt von ca. 8, wie er auch in Figur 3 eingezeichnet ist.

In der Praxis eigen sich hierzu besonders Übertragungskörper aus Kupfer. Besonders vorteilhaft sind im Handel befindliche Kupfer-Lackdrähte mit einem Durchmesser von ca. 1 bis 2 mm, wie sie z.B. zur Herstellung von Spulen oder Trafos verwendet werden. Als Lackbeschichtung wird hierzu z.B. Tränklack verwendet. Die Schallgeschwindigkeit $c_M$ im Übertragungskörper wird nun nicht nur durch den inneren Kupferkörper sondern auch durch diese Lackbeschichtung mit beeinflußt. Ferner wirkt die Lackbeschichtung auch gleichzeitig dämpfend auf die im Schallkörper 11 möglichen Resonanzerscheinungen ein. Dies ist deshalb besonders vorteilhaft, da die Übertragungskörper bei den verwendeten Frequenzen der Schallwellen auch akustische Resonatoren darstellen. Abhängig von der füllstandsabhängigen Länge h können bei bestimmten angeregten Senderfrequenzen die Schalleiter in Resonanz kommen. Dies führt zu einem nicht mehr ganz linearen Phasenfrequenzgang mit periodischen Schwankungen, wie er in Figur 3 mit 22 bezeichnet ist. Der Kunststoffüberzug trägt dabei zu der für einen linearen Phasenverlauf notwendigen Dämpfung bei.

In Figur 4a ist eine homogene Beschichtung 25 des Schalleiters 11c dargestellt. Der Einfluß der den Schalleiter in konstanter Dicke umgebenden Beschichtung 25 auf die Schallgeschwindigkeit $c_M$ im Innern des Schalleiters 11c ist deshalb gleichmäßig über die gesamte Länge bzw. Füllstandshöhe h verteilt. Durch das Profil, den Querschnitt, das Material und das Überzugsmaterial des Schalleiters kann die Phasenverschiebung der Schallwellen so angepaßt werden, daß sich ein eindeutiges Meßsignal ergibt. Der Füllstandsanzeiger 12 kann somit in weiten Grenzen der Tankhöhe L und der Form des Tanks angepaßt werden.

Aus den Figuren 4b und 4c ist eine inhomogene Beschichtung des Schalleiters erkennbar. Dadurch kann der Verlauf des Phasengangs $\phi$ in bestimmten Bereichen der Füllstandshöhe h beeinflußt werden. Der bei unregelmäßiger Tankform bestehende nichtlineare Zusammenhang zwischen Füllhöhe h und vorhandenem Kraftstoffvolumen V, wobei letzteres bestimmt werden soll, kann dabei so beeinflußt werden, daß ein linearer Verlauf des Phasengangs $\phi$ möglich ist. Hierzu wird z.B. im Bereich einer Ausbauchung des Tanks, also im Bereich eines gegenüber dem restlichen Volumen größeren Volumens des Mediums die Beschichtungsdicke erhöht. Durch die Beschichtung wird die Empfindlichkeit reduziert, wodurch der Phasenhub $\phi$ verringert wird und somit das Meßsignal dem geringeren Volumen angepaßt wird. Entsprechend der Ausbildung des Tanks kann der Schalleiter sowohl Verdünnungen als auch Verdickungen mit Hilfe des Beschichtungsmaterials 25 aufweisen.

Im Bereich der sogennanten Restmenge, des Reservebereichs, kann aber auch die Empfindlichkeit erhöht werden. Hierzu weist der aus Kupfer hergestellte Schalleiter 11c im Bereich 26 der Reservemenge keine Beschichtung auf, wie in Figur 4c dargestellt. Dadurch ist es möglich, mit Hilfe des Schalleiters 11c im beschichteten Bereich ein eindeutiges Meßsignal zu erzeugen und in einem kleinen Reservebereich den Meßbereich zusätzlich noch aufzuspreizen. Dieselbe Wir kung kann man auch mit einem Schalleiter 11d erreichen, der aus Abschnitten aus verschiedenen Materialien zusammengesetzt ist, wie in Figur 4d gezeigt. Das Material des Schalleiters 11c im Reservebereich 26 ist dabei auf hohe Meßempfindlichkeit abgestimmt, während das Material im restlichen Bereich auf ein eindeutiges Meßsignal ausgerichtet ist. Die Zusammensetzung aus verschiedenen Materialien kann aber auch auf eine beliebige Anzahl variiert werden, je nachdem, wie z.B. die Tankform gestaltet ist. Dadurch kann wieder ein linearer Meßkurvenverlauf erhalten werden, wie er in Figur 4b mit unterschiedlicher Beschichtungsdicke angestrebt wird.

Für eine exakte Messung der Füllhöhe h können auch zwei oder mehrere Schalleiter 11e, 11f aus verschiedenen Materialien in einem Tank verwendet werden. Jeder Schalleiter weist in Figur 5a einen eigenen Sender 13a bzw. 13b und einen eigenen Empfänger 14a bzw. 14b auf. Die beiden Sender 13a und 13b werden mit unterschiedlichen Frequenzen betrieben. Das Material des Schalleiters 11e, das mit dem Sender 13a mit der höheren Frequenz f1 in Wirkverbindung steht, ist auf einen möglichst großen Phasenhub $\phi$1 ausgerichtet, wobei eine Eindeutigkeit des Meßsignals unberücksichtigt bleibt. Beim anderen Schallleiter 11f mit dem Sender 13b mit der niedrigeren Frequenz f2 ist dabei auf einen eindeutig zuordbaren Phasenhub $\phi$2 ausgerichtet. Der Schalleiter 11f hat dabei die Aufgabe, für den anderen Schalleiter 11e eine eindeutige Zuordnung des hochaufgelösten Meßsignals zu ermöglichen. Das Signal kann noch dadurch verbessert werden, in dem die niedrigere Frequenz f2, also die Frequenz für das eindeutige Meßsignal, durch kohärente Teilung aus der höheren Frequenz f1 abgeleitet wird. Dadruch können störende Schwingungen und Überlagerungen vermieden werden.

Figure 5b zeigt eine Ausbildung mit zwei Schalleitern 11e und 11f aus unterschiedlichen Materialien, wie in Figur 5a, aber einen gemeinsamen Sender 13c mit einer einheitlichen Frequenz f1 = f2. In der Ausbildung nach Figur 5c ist ein doppelt U-förmiger (W-förmiger) Schalleiter 11g dargestellt, dessen äußere Schenkel aus verschiedenen Materialien und dessen gemeinsamer mittlerer Schenkel aus dem Material eines der beiden Schenkeln besteht. Am mittleren Schenkel ist ein gemeinsamer Sender 13c mit einer einzigen Frequenz angeordnet. Selbstverständlich ist es auch möglich, statt der linearen Ausbildung in den Figuren 5a und 5b zwei Ü-förmige Schalleiter zu verwenden oder wie in Figur 5e gezeigt, zwei U-förmige Schalleiter mit einem gemeinsamen Sender 13c zu kombinieren.


**Ansprüche**

1. Füllstandsanzeiger (12), insbesondere für Kraftstoffbehälter (10) von Kraftfahrzeugen, der mit Hilfe mindestens eines Schallwellen aussendenden Senders (13) und mindestens eines Empfängers (14) und mindestens eines in den Behälter (10) in das zu bestimmende Medium ragenden Übertragungskörpers (11) arbeitet, wobei das zu bestimmende Medium und das sich über dem zu bestimmenden Medium befindliche Medium unterschiedliche Schallimpedanz (Z) aufweisen und die in den oder die Übertragungskörper (11) eingeleiteten Schallwellen Lambwellen sind, deren Fortpflanzungsgeschwindigkeit von den den oder die Übertragungskörper (11) jeweils umgebenden Medium abhängt, und für ein Meßsignal der oder die Empfänger (14) die von der unterschiedlichen Füllstandshöhe (h) des zu bestimmenden Mediums abhängige Phasenverschiebung der Lambwellen erfaßt, die durch eine Verzögerung im zu bestimmenden Medium im Bereich des Übertragungskörpers (11) bewirkt wird, dadurch gekennzeichnet, daß mehrere Übertragungskörper (11e, 11f) aus unterschiedlichen Materialien im Behälter (10) angeordnet sind, daß jedem Übertragungskörper (11e, 11f) ein eigener Sender (13a, 13b) und ein eigener Empfänger (14a, 14b) zugeordnet ist, und daß über die Sender (13a, 13b) unterschiedliche Frequenzen (f1, f2) in dei Übertragungskörper (11e, 11f) eingespeist werden (Figur 5A, 5D).

2. Füllstandsanzeiger (12), insbesondere für Kraftstoffbehälter (10) von Kraftfahrzeugen, der mit Hilfe mindestens eines Schallwellen aussendenden Senders (13) und mindestens eines Empfängers (14) und mindestens eines in den Behälter (10) in das zu bestimmende Medium ragenden Übertragungskörpers (11) arbeitet, wobei das zu bestimmende Medium und das sich über dem zu bestimmenden Medium befindliche Medium unterschiedliche Schallimpedanz (Z) aufweisen und die in den oder die Übertragungskörper (11) eingeleiteten Schallwellen Lambwellen sind, deren Fortpflanzungsgeschwindigkeit von den den oder die Übertragungskörper (11) jeweils umgebenden Medium abhängt, und für ein Meßsignal der oder die Empfänger (14) die von der unterschiedlichen Füllstandshöhe (h) des zu bestimmenden Mediums abhängige Phasenverschiebung der Lambwellen erfaßt, die durch eine Verzögerung im zu bestimmenden Medium im Bereich des Übertragungskörpers (11) bewirkt wird, dadurch gekennzeichnet, daß mehrere Übertragungskörper (11e, 11f) aus unterschiedlichen Materialien im Behälter (10) angeordnet sind, daß in die Übertragungskörper (11e, 11f) über einen gemeinsamen Sender (13c) Frequenzen gleicher Größe eingespeist werden und daß jedem Übertragungskörper (11e, 11f) ein eigener Empfänger (14a, 14b) zugeordnet ist (Figur 5B, 5E).

3. Füllstandsanzeiger nach Anspruch 1 oder 2, dadurch gekennzeichnet, daß die Übertragungskörper (11e, 11f) U-förmig ausgebildet sind.

4. Füllstandsanzeiger nach einem der Ansprüche 1 bis 3, dadurch gekennzeichnet, daß die am Empfänger (14) eines Übertragungskörpers (11e, 11f) ankommenden Schallwellen um maximal einen Vollwinkel ($2\pi$) phasenverschoben sind.

5. Füllstandsanzeiger (12), insbesondere für Kraftstoffbehälter (10) von Kraftfahrzeugen, der mit Hilfe mindestens eines Schallwellen aussendenden Senders (13) und mindestens eines Empfängers (14) und mindestens eines in den Behälter (10) in das zu bestimmende Medium ragenden Übertragungskörpers (11) arbeitet, wobei das zu bestimmende Medium und das sich über dem zu bestimmenden Medium befindliche Medium unterschiedliche Schallimpedanz (Z) aufweisen und die in den oder die Übertragungskörper (11) eingeleiteten Schallwellen Lambwellen sind, deren Fortpflanzungsgeschwindigkeit von den den oder die Übertragungskörper (11) jeweils umgebenden Medium abhängt, und für ein Meßsignal der oder die Empfänger (14) die von der unterschiedlichen Füllstandshöhe (h) des zu bestimmenden Mediums abhängige Phasenverschiebung der Lambwellen erfaßt, die durch eine Verzögerung im zu bestimmenden Medium im Bereich des Übertragungskörpers (11) bewirkt wird, dadurch gekennzeichnet, daß ein W-förmig ausgebildeter Übertragungskörper (11g) vorhanden ist, daß der mittlere Schenkel und ein äußerer Schenkel des Übertragungskörpers (11g) aus einem ersten Material und der andere äußere Schenkel des Übertragungskörpers (11g) aus einem zweiten Material besteht, daß in den Übertragungskörper (11g) über einen gemeinsamen Sender (13c) Frequenzen gleicher Größe eingespeist werden und daß sich an den Enden der beiden äußeren Schenkeln je ein Empfänger (14) befindet (Figur 5C).

6. Füllstandsanzeiger nach Anspruch 5, dadurch gekennzeichnet, daß die am Empfänger (14) eines der äußeren Schenkels des Übertragungskörpers (1g) ankommenden Schallwellen um maximal einen Vollwinkel ($2\pi$) phasenverschoben sind.

7. Füllstandsanzeiger nach einem der Ansprüche 1 bis 6, dadurch gekennzeichnet, daß die Frequenz (f) der Schallwellen (17) im Ultraschallbereich liegt.

FIG.1

FIG.2

FIG.3

FIG.4A     FIG.4B     FIG.4C     FIG.4D

FIG.5A

FIG.5B

FIG.5C

FIG.5D

FIG.5E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| D,A | DE - A1 - 2 839 634 (MARCONI) <br> * Seite 4, Zeile 6 - Seite 5, Zeile 25; Seite 6, Zeile 9 - Seite 7, Zeile 17; Seite 8, Zeilen 8-18; Fig. 1,3,4 * <br> -- | 1,2,3, 4,5,6 | G 01 F 23/28 <br> G 01 F 23/04 |
| A | DE - A1 - 3 002 118 (J. HEINRICHS) <br> * Seite 3, Zeile 9 - Seite 6, Zeile 9; Fig. * <br> - ---- | 1,2,5, 7 | |

| | |
|---|---|
| | RECHERCHIERTE SACHGEBIETE (Int. CI.⁵) |
| | G 01 F 23/00 |

Der vorliegende Recherchenbericht wurde für alle Patentansprüche erstellt.

| Recherchenort | Abschlußdatum der Recherche | Prüfer |
|---|---|---|
| WIEN | 16-11-1990 | FIALLA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82